# EUROPÄISCHE PATENTSCHRIFT

(11) **EP 3 162 410 B1**
(45) Veröffentlichungstag und Bekanntmachung des Hinweises auf die Patenterteilung: **21.08.2019**
(21) Anmeldenummer: 16195223.9
(22) Anmeldetag: 24.10.2016
(51) Int. Cl.: A62B 1/14, A63B 29/02, A63B 29/08, F16G 11/10, F16M 13/00, F16M 13/04

(54) **HILFSMITTEL ZUM AUFSTIEG AM SEIL**
MEANS FOR ASCENDING A ROPE
MOYENS D'ASCENSION D'UNE CORDE

(30) Priorität: 27.10.2015 SI 201500264
(43) Veröffentlichungstag der Anmeldung: 03.05.2017
(73) Patentinhaber: Skylotec GmbH, 56566 Neuwied (DE)
(72) Erfinder: Staut, Miha, 6000 Koper (SI); Petrusa, Jaka, 6333 Secovlje (SI)
(74) Vertreter: Michalski Hüttermann & Partner Patentanwälte mbB

(56) Entgegenhaltungen:
- EP-A1- 1 683 551
- EP-A1- 2 191 870
- EP-A1- 2 216 075
- DE-A1-102010 023 264
- FR-A1- 2 972 936
- US-A1- 2009 249 586

## Beschreibung

### Gegenstand der Erfindung

Der Gegenstand der Erfindung ist ein Hilfsmittel zum Aufstieg am Seil und ist für Kletterer an seilunterstützten Zugangssystemen bestimmt, wie beispielsweise Höhenarbeiter, Rettungskräfte, Höhlenforscher, Höhenretter und sonstige Personen, die am Seil steigen.

### Stand der Technik

In der Technik sind diverse Hilfsmittel und Vorrichtungen bekannt, die den Kletterern den Aufstieg am Seil erleichtern, sowie auch Hilfsmittel und Vorrichtungen, die den Kletterer vor einem eventuellen Absturz schützen und als persönliche Schutzausrüstung zur Verhinderung des Absturzes aus der Höhe kategorisiert sind.

In der klassischen Klettertechnik mit einem oder zwei Seilen ist das Arbeitsseil für Vorrichtungen reserviert, die das Seil in eine Richtung effizient, ohne Abrutschen festhalten und sich in die andere Richtung fast widerstandslos frei bewegen. Mit solcher Funktionalität verhindern diese Vorrichtungen das Abrutschen des Kletterers am Seil bzw. im Falle von Seilmanövern mit Lasten das Abrutschen der Vorrichtung in Richtung der Kraft, die die Vorrichtung zieht. In der Vielzahl der Vorrichtungen für seilunterstützte Zugangssysteme, die diese Funktionalität erfüllen, sind Vorrichtungen, die als "Seilklemmen" bezeichnet werden, weit am geeignetsten, denn das effiziente Festhalten in eine Richtung und das fast widerstandslose Abrutschen des Seils in die andere Richtung wird gerade mit ihnen am besten umgesetzt.

Das technische Seilklettern entwickelte sich mit der Erscheinung der beschriebenen Hilfsmittel und Sicherheitsvorrichtungen in mehrere miteinander verwandte, aber unterschiedliche Aufstiegstechniken, die sich grob in amerikanische und europäische Techniken gliedern.

Die amerikanischen Techniken konzentrieren sich auf die größtmögliche Übertragung der für den Aufstieg benötigten Energie auf die Beine, was durch die Kombination der als "Dressler" (nach dem Erfinder Bruno Dressler) bezeichneten Vorrichtung, die auf Kniehöhe befestigt ist, und der Handklemme, die mit Gummiband im oberen Bereich des Körpers (z. B. über der Schulter) angeschlossen ist, so dass während das Bein mit der Fußschlaufe angehoben wird, die Klemme am Seil hochgezogen wird. Zwischen den beiden Vorrichtungen befindet sich die Brustklemme.

Die europäische Technik unterscheidet zwei Varianten, und zwar die Froschtechnik (frog technique) und die Leitertechnik (ladder technique).

Bei beiden wird die bekannte Kombination aus Brustklemme, die tragend an den Sitzgurt und oben am Brustgurt befestigt ist, und der mit der Fußschlaufe verbundenen Handklemme verwendet. Der Oberkörper wird bei dieser Technik zum Seil bewegt, indem die Verbindung zwischen dem Brustgurt und der Brustklemme zugezogen wird, was im Vergleich zu der amerikanischen Bruststütze mit Flaschenzug weniger effizient ist. Deshalb wird ein Teil der zum Aufstieg benötigten Kraft auch auf die Arme verlagert.

Der Unterschied zwischen den beiden europäischen Techniken liegt darin, dass bei der ersten beide Beine gleichzeitig (wie ein Frosch beim Springen) und bei der zweiten wechselweise benutzt werden. Die wechselweise Technik wäre ohne Zugabe einer weiteren Klemme nicht möglich. Dies wird in der europäischen Technik mit der Einführung der Fußklemme gelöst, die zur Effizienz und Geschwindigkeit des Aufstiegs des Kletterers bedeutend beiträgt.

Wegen des wechselseitigen Gebrauchs der Füße greift der Kletterer gewöhnlich mit mindestens einer Hand das Seil oberhalb der Handklemme. Die Effizienz des Kletterns verbessert sich mit dem höheren Griff.

DE 10 2010 023 264 A1 beschreibt eine selbstsichernde Steigklemme für ein Sicherungsseil, mit zwei seitlichen bogenförmigen Führungen in die ein Karabinerhaken einhakbar ist und einer rückseitigen Seilanschlagfläche, die im Sicherungsfall mit dem Karabinerhaken so zusammenwirkt, dass eine Blockierung des Sicherungsseils in der Steigklemme erfolgt, wobei die seitlichen Führungen und die Seilanschlagfläche eine u-förmige Aufnahme für das Sicherungsseil bilden.

EP 2 216 075 A1 beschreibt eine Steigklemme aufweisend eine metallische feste Flanschplatte, die mit einem geraden U-förmigen Trog und einem beweglichen Auslöser ausgerüstet ist, um ein Seil gegen eine Innenfläche des Troges zu blockieren.

### Technisches Problem

Das technische Problem, das bei den beschriebenen Klettertechniken auftritt, ist die Tatsache, dass man das Seil mit der Hand ohne oder mit Handschuhen nicht so fest halten kann, wie zum Beispiel mit einer Klemme. Dies gilt insbesondere unter Bedingungen mit hoher Feuchtigkeit, Regen, Eis oder Schlamm, wie zum Beispiel in Höhlen. Deshalb bemüht sich der Kletterer, das Seil auf unterschiedliche Weise zusammen zu drücken, allerdings wird er dabei schnell müde und legt die Hand auf die Handklemme. Daher ist es offensichtlich, dass Bedarf an einem Hilfsmittel besteht, das dieses Problem lösen würde, das man zusätzlich zu den bereits bekannten Hilfsmitteln verwenden könnte und es darüber hinaus nicht erforderlich wäre, dieses Hilfsmittel vor dem Gebrauch an das Seil anzubringen.

In der Technik ist kein Hilfsmittel und keine Vorrichtung bekannt, die das beschriebene technische Problem anders lösen würde, als ausschließlich mit einem Klemmensystem.

### Kurzbeschreibung der Erfindung

Die Erfindung ist durch die Merkmale des unabhängigen Anspruchs definiert. Vorteilhafte Ausgestaltungen sind durch die Merkmale der abhängigen Ansprüche definiert.

Die gegenständliche Erfindung löst das beschriebene technische Problem mit der Einführung eines Hilfsmittels 1, 2, das der Kletterer in der Hand hält, mit der er das Seil oberhalb der Handklemme greift. Das Hilfsmittel gemäß der gegenständlichen Erfindung ermöglicht dem Kletterer ein wesentlich sicheres Festhalten des Seils im Vergleich zum Festhalten mit der Hand ohne oder mit Handschuhen.

### Kurzbeschreibung der Abbildungen

Im Folgenden ist das Hilfsmittel zum Aufstieg am Seil, das Gegenstand der Erfindung ist, mithilfe der beigefügten Abbildungen beschrieben, die darstellen:
- Abbildung 1:: erste Ausführung des Hilfsmittels gemäß der gegenständlichen Erfindung, von der vorderen linken Seite,
- Abbildung 2:: erste Ausführung des Hilfsmittels gemäß der gegenständlichen Erfindung, von der hinteren rechten Seite,
- Abbildung 3:: erste Ausführung des Hilfsmittels gemäß der gegenständlichen Erfindung, von der linken Seite,
- Abbildung 4:: erste Ausführung des Hilfsmittels gemäß der gegenständlichen Erfindung, von der vorderen Seite,
- Abbildung 5:: erste Ausführung des Hilfsmittels gemäß der gegenständlichen Erfindung, von der vorderen linken Seite, am Kletterseil und mit eingefädelter Gummikordel,
- Abbildung 6:: zweite Ausführung des Hilfsmittels gemäß der gegenständlichen Erfindung, von der vorderen linken Seite,
- Abbildung 7:: zweite Ausführung des Hilfsmittels gemäß der gegenständlichen Erfindung, von der hinteren linken Seite,
- Abbildung 8:: zweite Ausführung des Hilfsmittels gemäß der gegenständlichen Erfindung, von der oberen Seite, und
- Abbildung 9:: zweite Ausführung des Hilfsmittels gemäß der gegenständlichen Erfindung, von der vorderen linken Seite, am Kletterseil und mit eingefädelter Gummikordel.

### Detaillierte Beschreibung der Erfindung

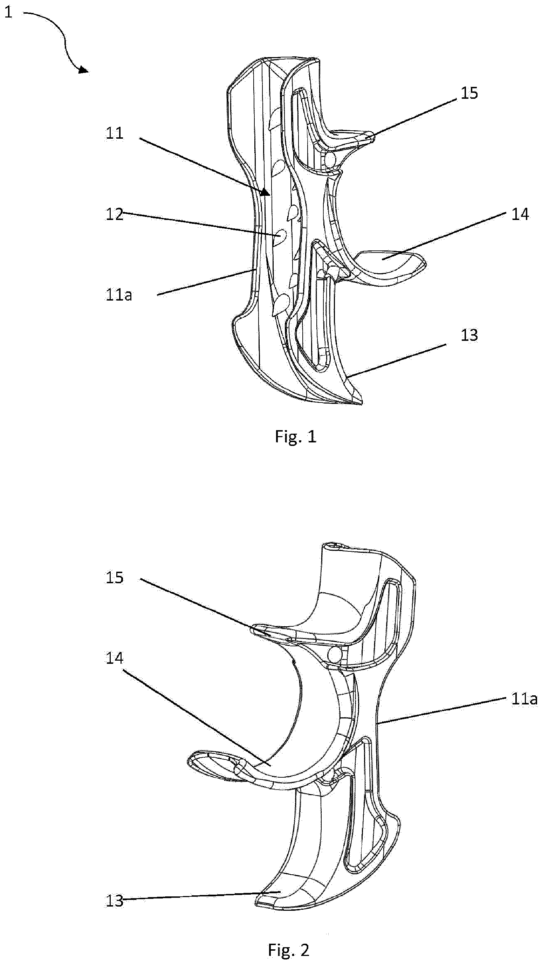

Die erste Ausführung des Hilfsmittels 1 zum Aufstieg am Seil gemäß der gegenständlichen Erfindung ist auf den Abbildungen 1 bis 5 dargestellt. Das Hilfsmittel 1 ist einteilig und hat einen länglichen, aufrechten Körper, der an der vorderen Seite durchgehend eine Nut 11 hat, in der mehrere spitze und nach unten gerichtete Zähne 12 angeordnet sind.

Die genannte Nut 11 hat an beiden Seiten im mittleren Teil niedrigere Seitenteile 11a und im unteren Teil ist sie sichtbar nach hinten gebogen, womit die untere Stütze 13 herausgebildet ist. Auf der Hinter- bzw. Rückseite des Hilfsmittels 1 ist oberhalb der unteren Stütze 13 die mittlere Stütze 14 herausgebildet, die sich ungefähr in der Mitte der Höhe des Hilfsmittels 1 befindet, im Grunde genommen flach ist und rechtwinklig vom Rückteil des Hilfsmittels 1 verläuft. Die genannte mittlere Stütze 14 ist nach oben gebogen.

Oberhalb der genannten mittleren Stütze 14 ist die obere Stütze 15 herausgebildet, die zusammen mit der mittleren Stütze 14 und dem Zwischenrückteil des Hilfsmittels 1 einen ungefähren Halbkreis mit dem Radius R bildet, der ungefähr dem Durchmesser des mittleren Fingers (Mittelfingers) des Benutzers (nicht dargestellt) entspricht.

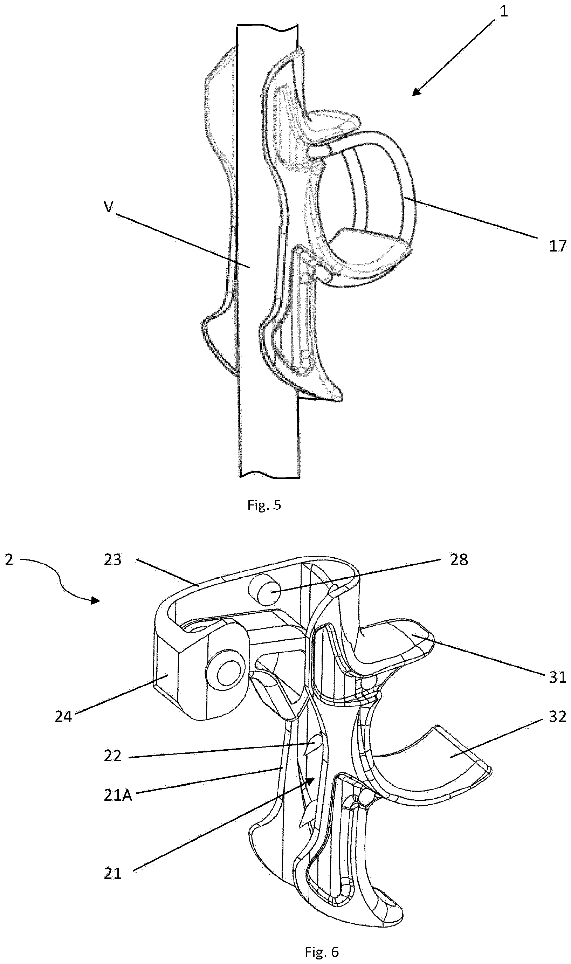

Im Bereich des Stoßes der oberen Stütze 15 und des Rückteils von Hilfsmittel 1 befindet sich das Durchgangsloch 16A und, entsprechend, befindet sich im Bereich des Stoßes der mittleren Stütze 14 und des Rückteils des Hilfsmittels 1 das Durchgangsloch 16B. Durch die Löcher 16A, 16B kann die Gummikordel 17 (Abbildung 5) eingefädelt werden, mit welcher der Benutzer das Hilfsmittel 1 an den Mittelfinger der Hand, mit der er es benutzt, anbringt.

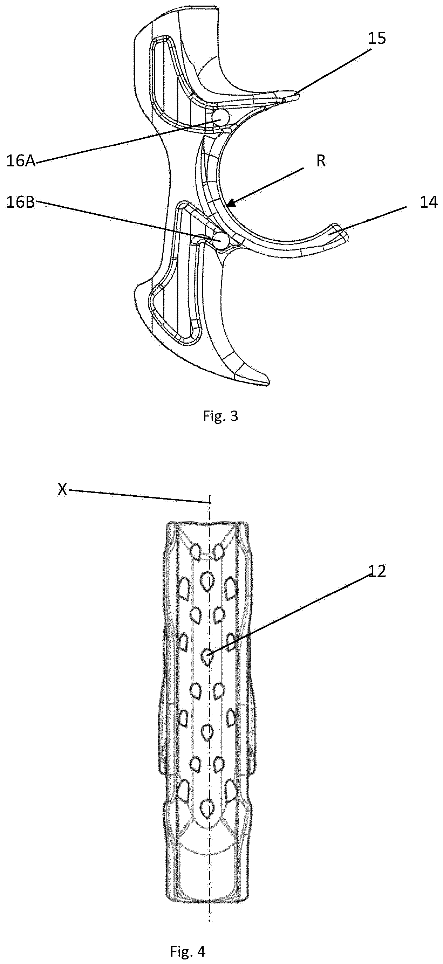

Das beschriebene Hilfsmittel 1 ist bezüglich der vertikalen Achse X (Abbildung 4) symmetrisch, deshalb ist es für den Gebrauch mit linker oder rechter Hand geeignet, und seine Besonderheit liegt auch darin, dass es vor dem Gebrauch nicht an das Kletterseil angebracht werden muss.

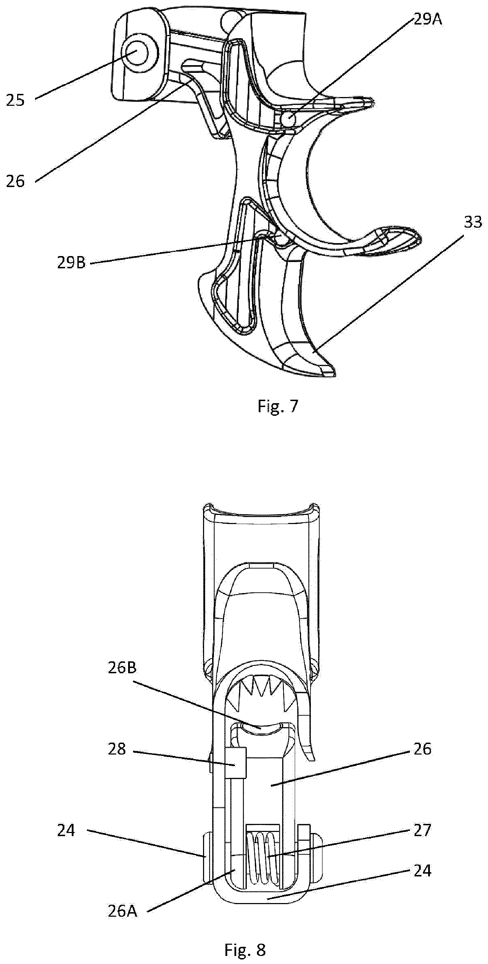

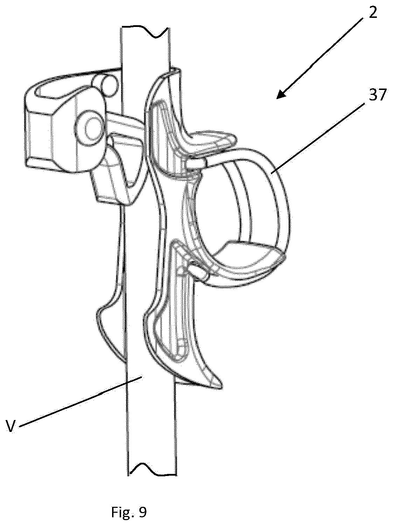

Die zweite Ausführung des Hilfsmittels 2 zum Aufstieg am Seil gemäß der gegenständlichen Erfindung ist auf den Abbildungen 5 bis 9 dargestellt. Das Hilfsmittel 2 ist im unteren Teil im Grunde gleich wie das Hilfsmittel 1, und zwar hat es einen aufrechten Körper, der an der vorderen Seite durchgehend eine Nut 21 besitzt, in der mehrere spitze und nach unten gerichtete Zähne 22 angeordnet sind, und an der Rückseite hat er die obere Stütze 31, mittlere Stütze 32 und untere Stütze 33, die gleich angeordnet und herausgebildet sind wie bei der ersten Ausführung von Hilfsmittel 1. Im Bereich des Stoßes der oberen Stütze 31 und des Rückteils von Hilfsmittel 2 befindet sich das Durchgangsloch 29A und, entsprechend, befindet sich im Bereich des Stoßes der mittleren Stütze 32 und des Rückteils von Hilfsmittel 2 das Durchgangsloch 29B. Durch die Löcher 29A, 29B kann eine Gummikordel 37 (Abbildung 9) eingefädelt werden, mit welcher der Benutzer das Hilfsmittel 2 an den Mittelfinger der Hand, mit der er es benutzt, anbringt.

Im oberen Teil hat das Hilfsmittel 2 vom oberen Teil der rechten Seite der Nut 21 einen nach vorne verlaufenden Seitenhebel 23, der im vorderen Teil im gebogenen Auslauf 24 endet.

In den beiden parallelen Wänden des genannten gebogenen Auslaufs 24 befinden sich zwei Löcher, durch die der Bolzen 25 verläuft, an dem beweglich das Schließsegment 26 angebracht ist, und zwar mit dem hinteren, gabelförmigen Teil 26A. Im genannten gabelförmigen Teil 26A ist an den Bolzen 25 die zylindrische Torsionsschraubenfeder 27 angebracht, die das Schließsegment 26 nach oben drückt.

Im oberen Teil des Seitenhebels 23, oberhalb des Segments 26, befindet sich ein Zapfen 28, der verhindert, dass sich das Schließsegment 26 über die Oberkante des Hilfsmittels 2 hinaus bewegt.

Die Fläche 26B des Schließsegments 26, die zu der Nut 21 gerichtet ist, ist gebogen, wobei die Biegelinie den Teil der logarithmischen Spirale mit Ausgangspunkt im Zentrum des Bolzens 25 beschreibt.

Am Rand der gebogenen Fläche 26B verläuft rundum eine radiale Führungsnut für eine bessere Positionierung des Seils. Das genannte Schließsegment 26 ist im mittigen Teil hohl, wodurch das Gesamtgewicht des Hilfsmittels 2 reduziert wird.

### Verwendung des Hilfsmittels bei der ersten Ausführung

Der Benutzer nimmt das Hilfsmittel 1 zum Aufstieg am Seil in die (linke oder rechte) Hand und zwar so, dass er es hinten mit den Fingern umfasst und dabei den Mittelfinger in den Bereich zwischen der mittleren Stütze 14, oberen Stütze 15 und der Gummikordel 17 (wenn er diese benutzt) steckt. Dabei legt er den Zeigefinger auf die obere Stütze 15 und den Ringfinger auf die untere Stütze 13.

Mit der Nut 11 umfasst er das Kletterseil V (Abbildung 5), wobei von Bedeutung ist, dass diese nicht an das Seil V angebracht werden muss. Durch das Ziehen des Hilfsmittel 1 nach unten und zum Benutzer hin, werden die spitzen Zähne 12 in das Seil hinein geschlagen und verhindern das Abrutschen des Hilfsmittels 1 am Seil, deshalb kann sich der Benutzer nach oben ziehen.

Nach dem abgeschlossenen Zug schiebt der Benutzer das Hilfsmittel 1 am Seil nach oben. Die spitzen Zähne 12 werden bei der Bewegung des Hilfsmittels 1 in diese Richtung zum Seil nicht in das Seil hinein geschlagen, deshalb ist das Gleiten des Hilfsmittels 1 am Seil nach oben möglich.

Durch die Löcher 16A, 16B kann eine Gummikordel 17 (Abbildung 5) eingefädelt werden, mit welcher der Benutzer das Hilfsmittel 1 an den Mittelfinger der Hand, mit der er das Hilfsmittel 1 verwendet, anbringt, womit das Herausfallen des Hilfsmittels 1 aus der Hand verhindert und gleichzeitig dem Benutzer ermöglicht wird, dass er, wenn er das Hilfsmittel 1 nicht benutzt, das Hilfsmittel 1 nach Bedarf am Handrücken platziert, so dass seine Hand frei für andere Aktivitäten ist.

### Verwendung des Hilfsmittels bei der zweiten Ausführung

Der Benutzer nimmt das Hilfsmittel 2 zum Aufstieg am Seil in die linke Hand und zwar so, dass er es hinten mit den Fingern umfasst und dabei den Mittelfinger in den Bereich zwischen der mittleren Stütze 32, oberen Stütze 31 und der Gummikordel 37 (wenn er diese benutzt) steckt. Dabei legt er den Zeigefinger auf die obere Stütze 31 und den Ringfinger auf die untere Stütze 33.

Der Benutzer drückt das Segment 26 so weit nach unten, dass es sich um ungefähr 90° um den Bolzen 25 dreht. In die entstandene Öffnung legt er das Seil V (Abbildung 9) und lässt das Segment 25 los. Die Feder 27 bringt das Segment 26 in seine Ausgangsposition zurück und das Segment 26 drückt mit der Fläche 26B das Seil V in die Nut 21, zu den spitzen Zähnen 22. Das Seil befindet sich jetzt in der Nut 21 über die gesamte Höhe des Hilfsmittels 2.

Durch das Ziehen des Hilfsmittel 2 nach unten und zum Benutzer hin, werden die spitzen Zähne 22 praktisch über die gesamte Höhe des Seils in das Seil V hinein geschlagen und verhindern das Abrutschen des Hilfsmittels 2 am Seil V und der Benutzer kann sich nach oben ziehen.

Nach dem abgeschlossenen Zug schiebt der Benutzer das Hilfsmittel 2 am Seil nach oben. Dabei lässt die Kraft, mit der das Segment 26 das Seil in die Nut 21 drücken kann, nach. Die spitzen Zähne 22 werden bei der Bewegung des Hilfsmittels 2 am Seil in die Richtung nach oben nicht in das Seil hinein geschlagen, deshalb ist das Gleiten des Hilfsmittels 2 am Seil V nach oben möglich.

Durch die Löcher 29A, 29B kann eine Gummikordel 37 (Abbildung 9) eingefädelt werden, mit welcher der Benutzer das Hilfsmittel 2 an den Mittelfinger der Hand, mit der er das Hilfsmittel 2 verwendet, anbringt, womit das Herausfallen des Hilfsmittels 2 aus der Hand verhindert und es dem Benutzer gleichzeitig ermöglicht wird, dass er, wenn er das Hilfsmittel 2 nicht benutzt, das Hilfsmittel 2 nach Bedarf am Handrücken platziert, so dass seine Hand frei für andere Aktivitäten ist.

Die niedrigeren Seitenteile 11A, 21A beim Hilfsmittel 1, 2 ermöglichen dem Benutzer, dass er das in die Nut 11, 21 eingesetzte Seil V mit dem Mittelfinger umfassen kann und es zusätzlich in die Nut 11, 21 drücken kann.

Das Hilfsmittel 1, 2 ist für die Verwendung zum Aufstieg an seilgestützten Zugangssystemen in Kombination mit Seilklemmen und sonstigen Kletter-Hilfsmitteln geeignet.

Das Hilfsmittel 1, 2 ist zum Aufstieg am Seil V mit einem Durchmesser von 8 bis 13 mm, wie sie in der Technik bereits bekannt sind, geeignet.

Das Hilfsmittel 1 wie auch der Grundkörper des Hilfsmittels 2 sind einteilig und sind vorzugsweise als Gussteil und zwar aus Metalllegierungen mit entsprechenden Festigkeitseigenschaften gefertigt, sie können aber auch aus Kunststoffen gefertigt sein, wobei Verbundmaterialien besonders geeignet sind. Die aufgezählten Materialien sind auch für die Fertigung des Segments 26 geeignet.

Das Material der Feder 27 ist Federstahl und der Bolzen 25 ist aus Stahl, vorzugsweise Edelstahl, gefertigt.

Die gegenständliche Erfindung ist oben mithilfe von Ausführungsbeispielen beschrieben, was aber die Erfindung selbst keinesfalls einschränkt. So ist beispielsweise das auf den Abbildungen dargestellte Hilfsmittel 2 zur Verwendung mit der linken Hand geeignet, selbstverständlich ist aber auch die Ausführung zur Verwendung mit der rechten Hand möglich. Möglich sind auch verschiedene Varianten der beschriebenen Erfindung, diese werden fachlich erfahrenen Personen sofort klar sein.

## Patentansprüche

1. Hilfsmittel (1, 2) zum Aufstieg am Seil (V), welches einen länglichen aufrechten Körper enthält, der auf der vorderen Seite eine durchgehende Nut (11, 21) hat, die auf beiden Seiten im mittleren Teil niedrigere Seitenteile (11a, 21a) hat, in der mehrere spitze und nach unten gerichtete Zähne (12, 22) angeordnet sind, wobei das genannte Hilfsmittel (1, 2) auf der Rückseite eine untere Stütze (13, 33), mittlere Stütze (14, 32) und obere Stütze (15, 31) sowie zwei Löcher (16A, 16B, 29A, 29B) enthält,
**dadurch gekennzeichnet, dass**
die obere Stütze (15, 31) zusammen mit der mittleren Stütze (14, 32) dem Zwischenrückteil des Hilfsmittels (1, 2) einen ungefähren Halbkreis mit dem Radius (R) bildet, der ungefähr dem Durchmesser des mittleren Fingers des Benutzers entspricht, oder dass
es durch die Löcher (16A, 16B; 29A, 29B) eine Gummikordel (17, 37) eingefädelt hat, die das Herausfallen des Hilfsmittels (1, 2) aus der Hand verhindert und dem Benutzer ermöglicht, dass Hilfsmittel (1, 2) bei Bedarf am Handrücken zu platzieren.

2. Hilfsmittel (1) gemäß Anspruch 1, **dadurch gekennzeichnet, dass** es einteilig ist, dass es vor der Verwendung nicht an das Seil (V) angebracht werden muss und dadurch, dass es bezüglich einer vertikalen Achse (X) symmetrisch ist.

3. Hilfsmittel (2) zum Aufstieg am Seil (V), **dadurch gekennzeichnet, dass** es vom oberen Teil des rechten Seitenteils der Nut (21) nach vorne verlaufend einen Seitenhebel (23) hat, der im vorderen Teil in einem gebogenen Auslauf (24) endet, wo sich in den beiden parallelen Wänden des genannten Auslaufs (24) zwei Löcher befinden, durch die ein Bolzen (25) verläuft, auf dem mit einem hinteren gabelförmigen Teil (26A) ein Schließsegment (26) beweglich angebracht ist, wo in dem genannten gabelförmigen Teil (26A) des Segments (26) eine zylindrische Torsionsschraubenfeder (27) angebracht ist, die das Schließsegment (26) nach oben drückt und sich im oberen Teil des Seitenhebels (23) oberhalb des Segments (26) ein Zapfen (28) befindet, der verhindert, dass sich das Schließsegment (26) über die Oberkante des Hilfsmittels (2) hinaus bewegt.

4. Hilfsmittel (2) gemäß Anspruch 3, **dadurch gekennzeichnet, dass** das Schließsegment (26) im mittigen Teil hohl ist, dass die Fläche (26B) des Schließsegments (26) gebogen ist und dass am Rand der gebogenen Fläche (26B) rundum eine radiale Führungsnut für eine bessere Positionierung des Seils verläuft.

5. Verwendung des Hilfsmittels (1, 2) gemäß einem der vorigen Ansprüche zum Aufstieg an seilgestützten Zugangssystemen in Kombination mit Seilklemmen und sonstigen Kletter-Hilfsmitteln oder 7. zum Aufstieg am Seil (V) mit einem Durchmesser von 8 bis 13 mm.

## Claims

1. Auxiliary device (1, 2) for ascent on a rope (V), which includes an elongated upright body which comprises on the front side a continuous groove (11, 21) having on both sides in the center portion lower side portions (11a , 21a), in which a plurality of acute and downwardly directed teeth (12, 22) are arranged, wherein
said auxiliary device (1, 2) comprises on the rear side a lower support (13, 33), a central support (14, 32) and an upper support (15, 31) and two holes (16A, 16B; 29A, 29B),
**characterized in that**
the upper support (15, 31) together with the central support (14, 32) form an approximate semicircle with a radius (R) which approximately corresponds to the diameter of the user's middle finger at the intermediate rear portion of the auxiliary device (1, 2), or
the auxiliary device comprises a rubber cord (17, 37) threaded through the holes (16A, 16B; 29A, 29B) which prevents falling out of the auxiliary device (1, 2) from the hand and allows the user to place the auxiliary device (1, 2) on the back of the hand, if necessary.

2. Auxiliary device (1) according to claim 1, **characterized in that**
it is integral;
it need not be attached to the rope (V) prior to use; and
it is symmetrical with respect to a vertical axis (X).

3. Auxiliary device (2) for ascent on a rope (V), **characterized in that** it comprises a side lever (23) extending forwardly from the upper portion of the right side portion of the groove (21) and ending in the front portion in a curved outlet (24), wherein in the two parallel walls of said outlet (24) two holes are provided, through which a bolt (25) extends, on which a locking segment (26) is movably mounted by means of a rear fork-shaped portion (26A), wherein in said forked portion (26A) of said segment (26) a cylindrical torsion coil spring (27) is mounted, which pushes the locking segment (26) upwardly, and wherein in the upper portion of the side lever (23) above the segment (26) a pin (28) is provided, which prevents the locking segment (26) from moving beyond the upper edge of the auxiliary device (2).

4. Auxiliary device (2) according to claim 3, **characterized in that**
the locking segment (26) is hollow in the central portion;
the surface (26B) of the locking segment (26) is bent; and
at the edge of the curved surface (26B) all around a radial guide groove for a better positioning of the rope extends.

5. Use of the auxiliary device (1, 2) according to any one of the preceding claims for ascent on rope-assisted access systems in combination with rope clamps and other climbing aids or for ascent on the rope (V) with a diameter of 8 to 13 mm.

## Revendications

1. Aide (1, 2) pour l'ascension d'une corde (V), laquelle contient un corps vertical allongé qui a une rainure (11, 21) tout du long sur le côté avant qui a des parties latérales (11a, 21a) plus basses dans la partie centrale sur les deux côtés dans lesquelles sont disposés plusieurs pointes et des dents (12, 22) orientées vers le bas, où
ladite aide (1, 2) comporte sur le côté arrière un appui inférieur (13, 33), un appui médian (14, 32), et un appui supérieur (15, 31), ainsi que deux trous (16A, 16B, 29A, 29B),
**caractérisée en ce que**
l'appui supérieur (15, 31) forme conjointement avec l'appui médian (14, 32) de la partie arrière intermédiaire de l'aide (1, 2) un demi cercle approximatif avec un rayon (R) qui correspond environ au diamètre du doigt médian de l'utilisateur, ou
qu'elle a une cordelette en caoutchouc (17, 37) enfilée à travers les trous (16A, 16B ; 29A, 29B) qui empêche l'aide (1, 2) de tomber de la main et permet à l'utilisateur de placer l'aide (1, 2) en cas de besoin sur le dos de la main.

2. Aide (1) selon la revendication 1, **caractérisée en ce qu'**elle est en une seule pièce, qu'elle ne doit pas être rapportée sur la corde (V) avant l'emploi et **en ce qu'**elle est symétrique par rapport à un axe (X) vertical.

3. Aide (2) pour l'ascension d'une corde (V), **caractérisée en ce qu'**elle a un levier latéral (23) s'étendant de la partie supérieure de la partie latérale droite de la rainure (21) vers l'avant qui se termine dans la partie avant avec un parcours (24) courbe où se trouvent deux trous dans les deux parois parallèles dudit parcours (24), trous traversés par un goujon (25), sur lequel un segment de fermeture (26) est rapporté de manière amovible avec une partie (26A) arrière en forme de fourche, où un ressort hélicoïdal de torsion (27) cylindrique est rapporté dans ladite partie (26A) en forme de fourche du segment (26) qui presse le segment de fermeture (26) vers le haut et une bonde (28) se trouve dans la partie supérieure du levier latéral (23) au-dessus du segment (26), qui empêche que le segment de fermeture (26) ne se déplace au-delà de l'arête supérieure de l'aide (2).

4. Aide (2) selon la revendication 3, **caractérisée en ce que** le segment de fermeture (26) est creux dans la partie centrale de sorte que la surface (26B) du segment de fermeture (26) est recourbée et qu'une rainure de guidage radiale s'étend tout autour du bord de la surface (26B) courbe pour un meilleur positionnement de la corde.

5. Utilisation de l'aide (1, 2) selon l'une des revendications précédentes pour l'ascension sur des systèmes d'accès basés sur des cordes en combinaison avec des pinces de corde et d'autres aides pour l'ascension ou 7. pour l'ascension d'une corde (V) avec un diamètre de 8 à 13 mm.
